# EUROPEAN PATENT APPLICATION

(11) **EP 2 551 998 A1**
(43) Date of publication of application: **30.01.2013**
(21) Application number: 10848378.5
(22) Date of filing: 24.03.2010
(51) Int. Cl.: H02K 11/00

(54) **INSTRUMENT FOR ADJOINING TEMPERATURE DETECTING ELEMENT**

(71) Applicant: Toyota Jidosha Kabushiki Kaisha, Toyota-shi, Aichi 471-8571 (JP)
(72) Inventor: KANESHIGE, Keiichi, Toyota-shi Aichi 471-8571 (JP); SAKAI, Masahiro, Toyota-shi Aichi 471-8571 (JP)
(74) Representative: Intès, Didier Gérard André
(86) International application number: PCT/JP2010/055122
(87) International publication number: WO 2011/117985

(57) **Abstract**

Disclosed is an instrument for allowing a temperature detecting element to adjoin the coil of a stator, which is part of a rotary electric machine, the instrument including an elastic member which is formed from an elastic material and presses the temperature detecting element to the coil, and a securing member for securing the elastic member to a body of the rotary electric machine to which the securing member is to be mounted.

## Description

### TECHNICAL FIELD

The present invention relates to an instrument for allowing a temperature detecting element to adjoin a coil of a stator which is part of a rotary electric machine.

### BACKGROUND ART

In general, a rotary electric machine such as an electric motor generates heat when it is operated. In particular, there is a possibility that an electric motor will rapidly generate a great quantity of heat when a load of the electric motor is excessive. In order to detect such heat generation to avoid damage to a coil or the like, conventionally, a temperature detecting element is attached to a coil end for detecting the temperature of the coil (see Patent Literature 1, for example).

In order to secure the temperature detecting element to the coil end, a method is adopted in which, after attaching the temperature detecting element to the coil end, the coil is wound at the coil end where insulating processing such as a varnish treatment is applied for adhesion (see Patent Literature 2, for example).

### PATENT LITERATURE

Patent Literature 1: JP 2004-274896 A
Patent Literature 2: JP 8-214505 A
Patent Literature 3: JP 2003-92858 A

### DISCLOSURE OF THE INVENTION

### TECHNICAL PROBLEMS

However, the method for securing the temperature detecting element to the coil end by winding the coil and applying insulation processing cannot be applied to a stator in which a solid-coated coil is used, or to a stator to which insulating processing cannot be applied. Further, depending on the method of leading the coil configuring the coil end, it may not always be possible to wind the coil around the temperature detecting element. Also, because only a varnish agent can be used for adhesion of the temperature detecting element at the time of the insulting processing, the degree of freedom in the manufacturing process is low.

It is an object of the present invention to provide an instrument which allows the temperature detecting element to adjoin the coil regardless of the structure or manufacturing process of a stator.

### SOLUTION TO PROBLEMS

In accordance with an aspect of the invention, there is provided an instrument for allowing a temperature detecting element to adjoin a coil of a stator, which is part of a rotary electric machine, the instrument including an elastic member that is formed from an elastic material and presses the temperature detecting element to the coil, and a securing member that secures the elastic member to a mount body of the rotary electric machine on which the securing member is to be mounted.

Further, it is preferable that in the instrument for allowing the temperature detecting element to adjoin the coil, the securing member includes a bolt hole, and the elastic member is secured to the mount body of the rotary electric machine by fastening the elastic member to the mount body of the rotary electric machine with a bolt through the bolt hole of the securing member.

Also, it is preferable that in the instrument for allowing the temperature detecting element to adjoin the coil, the elastic member is secured to the mount body of the rotary electric machine by welding the securing member to the mount body of the rotary electric machine.

Moreover, it is preferable that the instrument for allowing the temperature detecting element to adjoin the coil includes a stopper that stops a predetermined quantity or greater of elastic deformation of the elastic member.

In addition, it is preferable that in the instrument for allowing the temperature detecting element to adjoin the coil, the elastic member has a U-shape cross section from the securing member over to the temperature detecting element.

Also, it is preferable that in the instrument for allowing the temperature detecting element to adjoin the coil, the elastic member has an inclined shape having a predetermined angle of inclination from the securing member over to the temperature detecting element.

Furthermore, it is preferable that in the instrument for allowing the temperature detecting element to adjoin the coil, the elastic member includes a first elastic portion and a second elastic portion each having a U-shape cross section from the securing member over to the temperature detecting element, the first elastic portion and the second elastic portion being opposed to each other so as to form an annular shape.

In addition, it is preferable that in the instrument for allowing the temperature detecting element to adjoin the coil, the elastic member has a ring shape.

Also, it is preferable that in the instrument for allowing the temperature detecting element to adjoin the coil, the elastic member is a coil spring.

### ADVANTAGEOUS EFFECTS OF INVENTION

According to the present invention, it is possible to allow the temperature detecting element to adjoin the coil regardless of the structure or manufacturing process of the stator.

### BRIEF DESCRIPTION OF THE DRAWINGS

[FIG. 1] A schematic view illustrating an example structure of a rotary electric machine to which an instrument for allowing a temperature detecting element to adjoin a coil according to the present embodiment is applied.
[FIG. 2] A schematic top view illustrating an example structure of a stator core.
[FIG. 3] A schematic perspective view illustrating an example structure of the instrument for allowing a temperature detecting element to adjoin a coil according to an embodiment of the present embodiment.
[FIG. 4] A schematic perspective view illustrating an example structure of an instrument for allowing a temperature detecting element to adjoin a coil according to another embodiment of the present embodiment.
[FIG. 5] A schematic top view illustrating an example structure of an instrument for allowing a temperature detecting element to adjoin a coil according to another embodiment of the present embodiment.
[FIG. 6] A schematic top view illustrating an example structure of an instrument for allowing a temperature detecting element to adjoin a coil according to still another embodiment of the present embodiment.
[FIG. 7] A schematic top view illustrating an example structure of an instrument for allowing a temperature detecting element to adjoin a coil according to a further embodiment of the present embodiment.
[FIG. 8] A schematic top view illustrating an example structure of an instrument for allowing a temperature detecting element to adjoin a coil according to a still further embodiment of the present embodiment.
[FIG. 9] A schematic top view illustrating an example structure of an instrument for allowing a temperature detecting element to adjoin a coil according to a further embodiment of the present embodiment.

### MODE FOR CARRYING OUT THE INVENTION

Preferred embodiments of the present invention will be described with reference to the drawings.

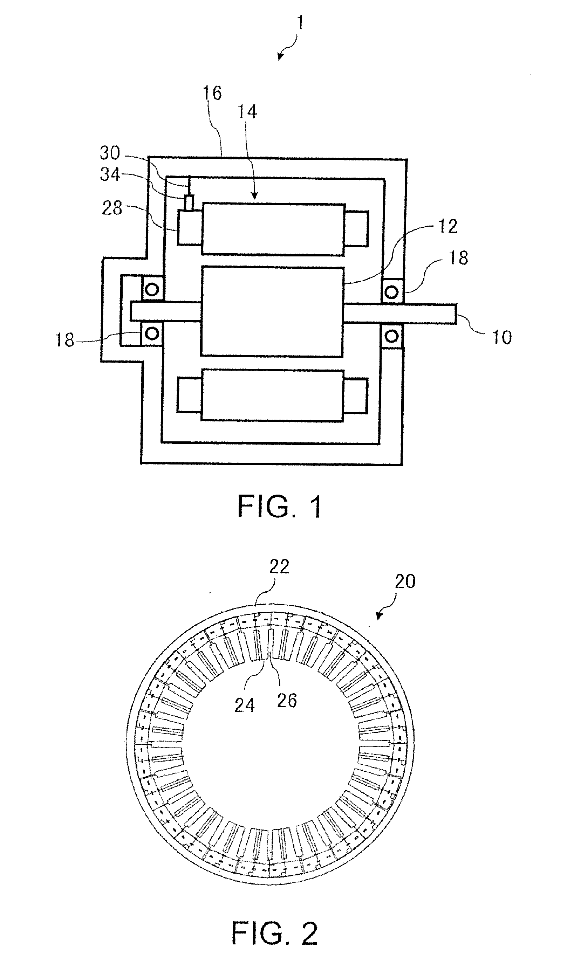

FIG. 1 is a schematic view illustrating an example structure of a rotary electric machine in which an instrument for allowing a temperature detecting element to adjoin a coil according to an embodiment of the present application is applied. The rotary electric machine 1 illustrated in FIG. 1 is a motor generator having at least one of a function as a motor by electric power being supplied thereto and a function as a power generator.

The rotary electric machine 1 illustrated in FIG. 1 includes a rotor shaft 10, a rotor 12, a stator 14 disposed in the outer peripheral direction of the rotor 12, and a motor case 16 (a container of the rotary electric machine).

The rotor 12 includes a rotor core and a permanent magnet (not shown) that is embedded in the rotor core, and rotates about the rotor shaft 10 which is supported by a bearing 18 provided in the motor case 16. The rotor core has a cylindrical shape along the rotor shaft 10 and is composed of a plurality of electromagnetic steel plates stacked in the axial direction, for example. A plurality of permanent magnets which are not shown are embedded at equal angles in the outer circumferential portion of the rotor core.

The stator 14 includes a cylindrical stator core and is disposed opposing the rotor 12 via a predetermined gap. The stator core is composed of a plurality of electromagnetic steel plates stacked in the axial direction, for example. However, the stator core is not necessarily limited to such a configuration, and may be composed of a powder magnetic core, for example.

FIG. 2 is a schematic top view illustrating an example structure of the stator core. As illustrated in FIG. 2, the stator core 20 is composed of an annular yoke portion 22 and a plurality of teeth portions 24 which are arranged in the circumferential direction of the yoke portion 22 at predetermined intervals so as to project from the inner circumferential surface of the yoked portion 22 toward the inner side in the radial direction thereof. Further, a slot portion 26 is formed in a space enclosed by adjoining teeth portions 24 and the yoke portion 22. Also, an outer cylinder, which is not shown, is fitted on the outer circumference of the stator core 20.

A coil is wound around the stator core 20, and a portion of the coil projecting at end portions of the stator core forms a coil end 28 illustrated in FIG. 1. The coil end 28 is disposed along the circumferential direction of the cylindrical stator core 20.

The coil is not particularly restricted and is a copper wire that is insulating-coated, for example. The coil includes a U-phase coil, V-phase coil, and W-phase coil. The coil end 28 is electrically connected with a control apparatus by means of cables corresponding to the respective phases, although not shown in the drawings. For example, the control apparatus, when receiving a torque instruction value to be output from the rotary electric machine 1 input thereto, generates motor control current for outputting a torque designated by the torque instruction value, which is supplied to the coil end 28 via the cables.

The winding of the coil on the stator core 20 may include a distributed winding, concentrated winding, or the like, and is not particularly limited. The distributed winding refers to a method of winding the coil around each of the plurality of teeth portions 24 through the slot potions 26 formed on both sides of each of the plurality of teeth portions 24 arranged in the circumferential direction. Further, the concentrated winding refers to a method of concentratedly winding the coil on the teeth portions 24 of each magnetic pole.

The surface of the coil end 28 is covered with an insulating coating so as to ensure an insulation property of the coil end 28. The insulating coating is generally formed from a varnish agent made by dissolving a resin in a solvent, but is not limited to this example. Here, the coil end 28 of the present embodiment may be varnish-less.

The rotary electric machine 1 includes a temperature sensor, such as a thermistor, for detecting the temperature of the coil, and an instrument 30 for allowing a thermistor element 34 forming the thermistor to adjoin the coil.

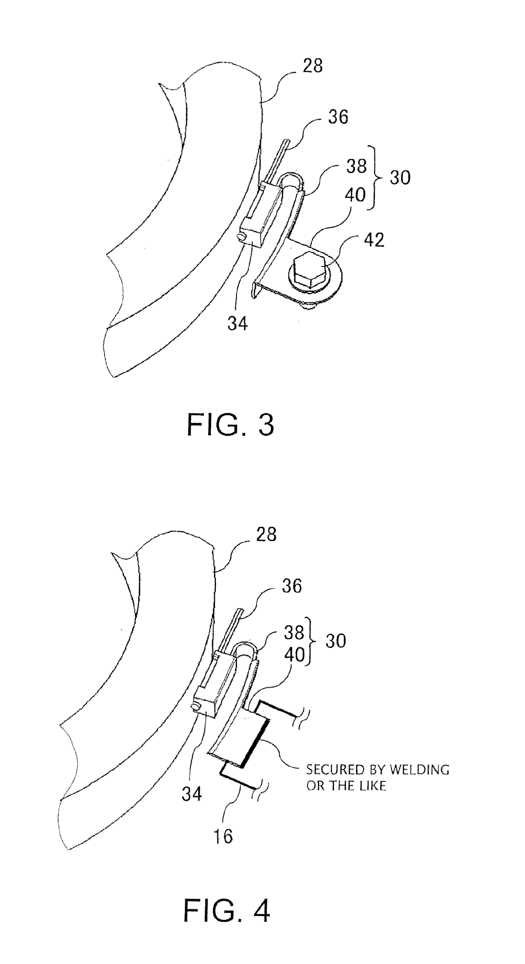

FIG. 3 is a schematic perspective view illustrating one example structure of an instrument for allowing a temperature detecting element to adjoin a coil according to an embodiment of the present invention. A thermistor 32 includes a thermistor element 34 and a lead wire 36, and the thermistor element 34 adjoins the coil end 28 by means of the instrument 30 that allows the temperature detecting element to adjoin the coil end. When it is determined, based on the temperature data of the coil end 28 detected by the thermistor element 34, that the coil is in a heated state, processing is executed for suppressing the output of the rotary electric machine 1, for example. Further, the instrument 30 that allows the temperature detecting element to adjoin the coil includes an elastic member 38 that presses the thermistor element 34 onto the coil end 28 and a securing member 40 that secures the elastic member 38 to the motor case 16. While, in all of the embodiments which will be described, the elastic member 38 presses the thermistor element 34 onto the coil end 28, the thermistor element 34 is not necessarily pressed onto the coil end 28 as long as it is pressed onto the coil that is wound around the stator 14.

The elastic members 38 illustrated in FIG. 3 is formed of an elastic plate member such as a metal leaf spring, an elastic wire rod such as a linear spring, or the like. The elastic member 38 illustrated in FIG. 3 has a U-shape cross section from the securing member 40 over to the thermistor element 34. The securing member 40 is provided at one end of the elastic member 38 and the thermistor element 34 is fixed to the other end of the elastic member 38.

The elastic member 38 is disposed so as to elastically deform with respect to the securing member 40 serving as a support point, and presses the thermistor element 34 onto the coil end 28 by an elastic action caused by the elastic deformation. The locations at which the instrument 30 that allows the temperature detecting element to adjoin the coil and the thermistor element 34 are provided are not necessarily limited to this example. For example, a structure in which the securing members 40 are provided at both ends of the U-shape cross section and the thermistor element 34 is secured to the summit of the U-shape on the opposite side, or the like, may be adopted.

The securing member 40 includes a bolt hole (a through hole) formed therein. If the motor case 16 includes a bolt 42 and an internal thread portion (not shown) into which the bolt 42 is screwed provided therein, the bolt 42 is inserted into the bolt hole formed in the securing member 40 and is further screwed into the internal thread portion formed in the motor case 16 to thereby secure the elastic member 38. With this structure, it is possible to secure the elastic member 38 without providing additional bolt 42 and internal thread portion in order to secure the elastic member 38.

After providing the instrument 30 that allows the temperature detecting element to adjoin the coil, the elastic member 38 in contact with the coil end 28 may be coated with a varnish agent for adhesion.

The instrument 30 including the elastic member 38 and the securing member 40, that allows the temperature detecting element to adjoin the coil, may be manufactured by molding the instrument from a metal material as an integral unit by using a die or the like, or by molding the elastic member 38 and the securing member 40 separately by using a die or the like and then forming these portions as an integral unit by welding or the like.

The method of securing the elastic member 38 to the thermistor element 34 is not particularly limited and may be welding, adhesion by using an adhesive, fitting the elastic member 38 into the case of the thermistor element 34, or the like.

FIG. 4 is a schematic perspective view illustrating an example structure of an instrument that allows the temperature detecting element to adjoin the coil according to another embodiment of the present invention. When securing by means of a bolt is difficult, due to the problems of the place and space where the instrument 30 that allows the temperature detecting element, to adjoin the coil is disposed, and so on, the elastic member 38 may be secured by welding the securing member 40 onto the motor case 16, for example. With this structure, it is possible to secure the elastic member 38 without providing a bolt hole.

While, in the present embodiment, the motor case 16 is described as a body on which the securing member 40 is to be mounted the present invention is not necessarily limited to this structure so long a the space for mounting the securing member 40 is ensured. For example, the securing member 40 may be secured to the outer cylinder described above serving as a body on which the securing member 40 is amounted, for example.

According to the present embodiment, by pressing the thermistor element 34 onto the coil end 28 by an elastic action caused by the elastic deformation of the elastic member 38, the thermistor element 34 is placed so as to adjoin the coil. As such, because it is possible to allow the thermistor element 34 to adjoin the coil without using coils and varnish and so on forming the stator 14, as in the conventional winding of the coil and insulation processing or the like, there are substantially no effects on the structure or manufacturing process of the stator 14. Further, with the conventional securing method, because the thermistor element 34 is embedded within the coil end 28 due to winding of the coil, it is necessary to change the stator 24 as a whole if the thermistor element 34 fails, resulting in a significant increase in the repairing coasts. According to the present embodiment, however, as the element is caused to adjoin the coil by pressing the thermistor element 34 onto the surface of the coil end 28, even if the thermistor element 34 fails, only the thermistor element can be exchanged, so that the repairing costs can be kept low.

The shape of the elastic member 38 of the present embodiment is not particularly limited so long as it can press the thermistor element 34 onto the coil end 28. The modification examples of the elastic member 38 will be described below.

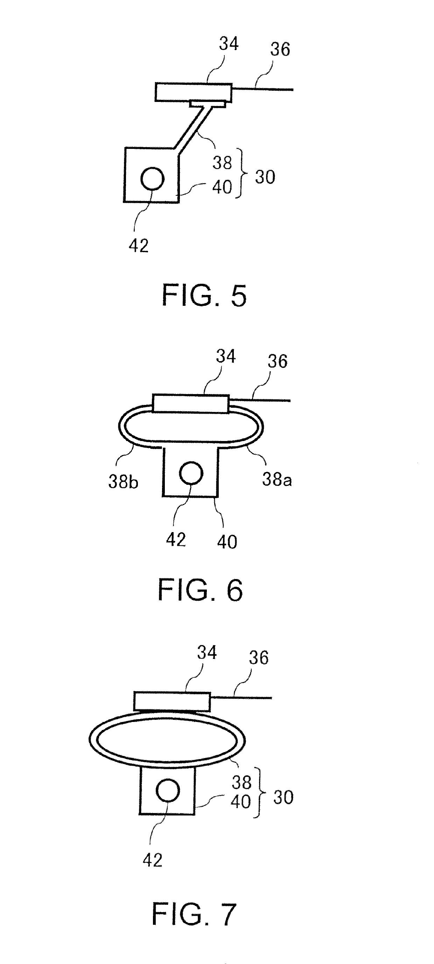

FIG. 5 is a schematic top view illustrating an example structure of an instrument that allows the temperature detecting element to adjoin the coil according so another embodiment of the present invention. The elastic member 38 illustrated in FIG. 5 has an inclined plate shape (or a linear shape) having a predetermined angle of inclination from the securing member 40 to the thermistor element 34. The securing member 40 is provided at one end of the elastic member 38 and the thermistor element 34 is secured to the other end. The angle of inclination of the elastic member 38 is defined such that the elastic member 38 undergoes elastic deformation with respect to the securing member 40 serving as a support point when the instrument that allows the temperature detecting element to adjoin the coil is mounted.

FIG. 6 is a schematic top view illustrating one example structure of an instrument that allows a temperature detecting element to adjoin the coil according to still another embodiment of the present invention. The elastic member 38 illustrated in FIG. 6 includes first and second elastic portions 38a and 38b each having a U-shape cross section from the securing member 40 over to the thermistor element 34. The first and second elastic portions 38a and 38b are placed opposite to each other to together form an annular shape. The securing member 40 is provided at one end of each of the first and second elastic portions 38a and 38b, and the thermistor element 34 is secured to the other end thereof. With the above structure, because a pressing force to the thermistor element 34 can be increase, it is possible to allow the thermistor element 34 to adjoin the coil end 28 in a stable manner.

The arrangement of the first and second elastic portions 38a and 38b is not limited to the above example, and the first and second elastic portions 38a and 38b having a U-shape cross section may be arranged such that they are aligned to face in the same direction. However, the structure in which the first and second elastic portions 38a and 38b having a U-shape cross section are opposed to each other to together form an annular shape is more preferable because, with this structure, the first and second elastic portions 38a and 38b having the same size can be used, and therefore manufacturing is easier.

FIG. 7 is a schematic top view illustrating one example structure of an instrument that allows a temperature detecting element to adjoin the coil according to a further embodiment of the present invention. The elastic member 38 illustrated in FIG. 7 has a ring shape, with the securing member 40 being provided on a portion of the elastic member 38 and the thermistor element 34 being secured on the opposite side.

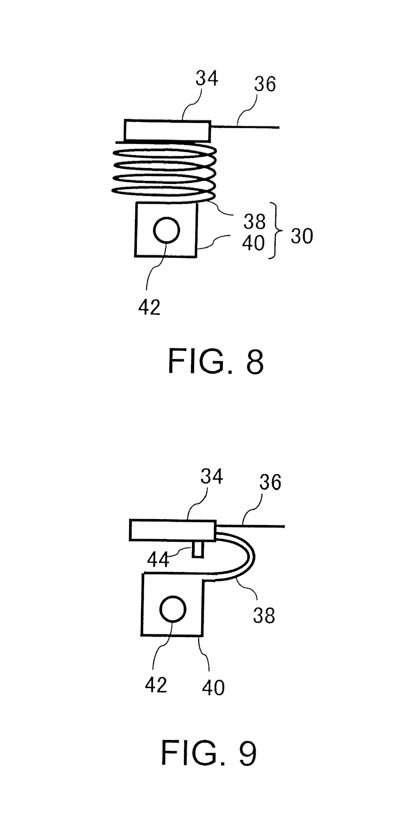

FIG. 8 is a schematic top view illustrating one example structure of an instrument that allows a temperature detecting element to adjoin the coil according to a still further embodiment of the present invention. The elastic member 38 illustrated in FIG. 8 is an elastic material such as a coil spring, and the securing member 40 is provided on one end of the elastic member 38 with the thermistor element 34 being secured to the other end thereof.

With any of the shapes of the elastic members 38 described above, the elastic member 38 can press the thermistor element 34 into pressure contact with the coil end 28 by an elastic action caused by elastic deformation of the elastic member 38 with respect to the securing member 40 serving as a support point.

FIG. 9 is a schematic top view illustrating an example structure of an instrument that allows a temperature detecting element to adjoin the coil according to another embodiment of the present invention. The instrument 30 that allows a temperature detecting element to adjoin the coil includes a stopper 44 that stops a predetermined quantity or greater of elastic deformation of the elastic member 38. With this configuration, even when unexpected excessive force is applied to the elastic member 38 at the time of mounting the instrument 30, during transportation of the product, or the like, because a predetermined quantity or greater of elastic deformation of the elastic member 38 is stopped by the stopper 44, it is possible to suppress subsidence of the elastic force of the elastic member 38 by presenting the elastic member 38 from exceeding the yield point. The dimension, the mounting location, or the like of the stopper 44 may be set as appropriate such that the stopper 44 can stop the predetermined quantity or greater of the elastic deformation of the elastic member 38, and are not limited to those in the case in which the stopper 44 is mounted on the thermistor element 34, as illustrated in FIG. 9. Alternatively, the stopper 44 may be mounted on the securing member 40 or the elastic member 38.

### REFERENCE SYMBOLS LIST

1 rotary electric machine, 10 rotor shaft, 12 rotor, 14 stator, 16 motor case, 18 bearing, 20 stator core, 22 yoke portion, 24 teeth portion, 26 slot portion, 28 coil end, 30 instrument that allows a temperature detecting element to adjoin, 32 thermistor, 34 thermistor element, 36 lead wire, 38, 38a, 38b elastic member, 40 securing member, 42 bolt, 44 stopper.

## Claims

1. An instrument for allowing a temperature detecting element to adjoin a coil of a stator, which is part of a rotary electric machine,
the instrument comprising:
an elastic member that is formed from an elastic material and presses the temperature detecting element to the coil; and
a securing member that secures the elastic member to a mount body of the rotary electric machine on which the securing member is to be amounted.

2. The instrument for allowing a temperature detecting element to adjoin a coil according to Claim 1, wherein
the securing member includes a bolt hole, and the elastic member is secured to the mount body of the rotary electric machine by fastening the elastic member to the mount body of the rotary electric machine with a bolt through the bolt hole of the securing member.

3. The instrument for allowing a temperature detecting element to adjoin a coil according to Claim 1, wherein
the elastic member is secured to the mount body of the rotary electric machine by welding the securing member to the mount body of the rotary electric machine.

4. The instrument for allowing a temperature detecting element to adjoin a coil according to Claim 1, comprising:
a stopper that stops a predetermined quantity or greater of elastic deformation of the elastic member.

5. The instrument for allowing a temperature detecting element to adjoin a coil according to Claim 1, wherein
the elastic member has a U-shape cross section from the securing member over to the temperature detecting element.

6. The instrument for allowing a temperature detecting element to adjoin a coil according to Claim 1, wherein
the elastic member has an inclined shape having a predetermined angle of inclination from the securing member over to the temperature detecting element.

7. The instrument for allowing a temperature detecting element to adjoin a coil according to Claim 1, wherein
the elastic member includes a first elastic portion and a second elastic portion each having a U-shape cross section from the securing member over to the temperature detecting element, the first elastic portion and the second elastic portion being opposed to each other so as to form an annular shape.

8. The instrument for allowing a temperature detecting element to adjoin a coil according to Claim 1, wherein
the elastic member has a ring shape.

9. The instrument for allowing a temperature detecting element to adjoin a coil according to Claim 1, wherein
the elastic member is a coil spring.
